# EUROPÄISCHE PATENTSCHRIFT

(11) **EP 0 808 654 B1**
(45) Veröffentlichungstag und Bekanntmachung des Hinweises auf die Patenterteilung: **14.11.2001**
(21) Anmeldenummer: 97108386.0
(22) Anmeldetag: 23.05.1997
(51) Int. Cl.: B01F 7/00

(54) **Einhängevorrichtung**
Attaching device
Dispositif d'accrochage

(30) Priorität: 24.05.1996 DE 19620986
(43) Veröffentlichungstag der Anmeldung: 26.11.1997
(73) Patentinhaber: ABS Pump Center GmbH, 53797 Lohmar (DE)
(72) Erfinder: Becker, Klaus, 51469 Bergisch Gladbach (DE); Dirla, Manfred, 51491 Overath (DE); Wasser, Wilfried, 53819 Neunkirchen-Seelscheid (DE)
(74) Vertreter: Kierdorf, Theodor, Dipl.-Ing.

(56) Entgegenhaltungen:
- EP-A- 0 205 413
- EP-A- 0 367 664
- EP-A- 0 726 090
- DE-A- 3 420 094
- DE-A- 3 941 724
- DE-U- 9 404 188
- US-A- 4 431 597

## Beschreibung

Die Erfindung betrifft eine Einhängevorrichtung für ein an einem Leitelement oder dergleichen geführtes Rührwerk, insbesondere zum Einsatz in Misch- und Belebungsbecken oder Pumpensümpfen oder dergleichen, im wesentlichen bestehend aus einer an dem Rührwerk angeordneten, das Leitelement umgreifenden Halterung sowie einer die Gewichtskraft des Rührwerks in der Arbeitsstellung aufnehmenden Stützeinrichtung.

Eine derartige Einhängevorrichtung ist beispielsweise aus der DE 39 00 630 C2 bekannt. Die dort beschriebene Einhängevorrichtung besteht aus einer an einem Vierkant-Leitrohr angeordneten, entlang des Leitrohrs verschieblichen Führungseinheit, an welcher eine Mischeinrichtung bzw. ein Rührwerk befestigt ist. Weiterhin ist an dem Leitrohr eine Auflagevorrichtung vorgesehen, auf welcher das Rührwerk in seiner Arbeitsposition aufliegt.

Die Führungseinrichtung und das Leitrohr wirken als Gleitführung zusammen, wobei das Rührwerk beispielsweise über ein an dem Rührwerkskörper angeschlagenes Drahtseil und einen außerhalb des Mischbeckens angeordneten Hebegalgen aus dem Mischbecken heraushebbar ist bzw. auf der Auflagevorrichtung absetzbar ist.

In der Regel werden die bekannten Rührwerke oder Mischeinrichtungen mit Propeller-Umdrehungszahlen von 25 bis 200 U/min betrieben. Dabei werden hohe Impulskräfte in die zu mischende Suspension bzw. in das zu rührende Medium eingeleitet. Bedingt durch Turbulenzen und durch teilweise bauwerksbedingte ungleichmäßige Anströmungen des Rührwerks kommt es zwangsläufig zu Vibrationen, die von dem Rührwerk in das Leitrohr eingeleitet werden. Diese Schwingungen führen zu Verschleißerscheinungen, die sich durch zunehmendes Spiel zwischen dem Leitrohr und der an dem Rührwerk befestigten Führungsvorrichtung bemerkbar machen. In der Regel sind die Führungseinrichtungen mit verschleißfesten Kunststoff-Auskleidungen versehen, die auch eine galvanische Trennung zwischen Leitrohr und Rührwerk bewirken. Diese Kunststoff-Auskleidungen arbeiten sich mit der Zeit aus, so daß das Rührwerk anfängt zu pendeln. Die Pendelkräfte werden in das Leitrohr und von diesem in die obere und untere Befestigung des Leitrohrs, d. h. in den Beckenboden bzw. in die Mauerkrone oder die über dem Belebungsbecken verlegte Brücke eingeleitet. Die Pendelbewegungen des Rührwerks können dabei mit der Zeit so zunehmen, daß es vereinzelt zu Ermüdungsbrüchen des Leitrohrs kommen kann. Hierdurch wurde bislang auch die in der DE 39 00 630 C2 beschriebene freie Aufstellung des Rührwerks in etwa in der Beckenmitte ohne Befestigung des Leitrohrs an einer Brücke erschwert oder gar verhindert.

Aus der DE 43 32 011 A1 ist eine Stützeinrichtung für ein an einem Leitrohr geführtes Rührwerk vorgesehen gemäß dem einleitenden Teil des Anspruchs 1, welches die an dem Leitrohr verschiebliche Halterung des Rührwerks in Arbeitsstellung des Rührwerks abstützt. Damit die Halterung, die in der DE 43 32 011 A1 als Führungseinheit bezeichnet ist, beim Absetzen des Rührwerks in die Arbeitsstellung geführt wird, sind an der Auflage für die Halterung bzw. Führungseinheit ein oder mehrere Führungsflächen vorgesehen, die seitlich geneigt verlaufen. Weiterhin ist die Auflage mit einem elastischen Überzug versehen, mit welchem eine schwingungsarme Aufnahme der Führungseinheit erreicht werden soll.

Die vorstehend beschriebene Problematik stellt sich jedoch auch bei dem in der DE 43 32 011 A1 beschriebenen Rührwerk, da die Einleitung von Pendel- und Torsionsmomenten in die Halterung aufgrund der Nachgiebigkeit des Materials, insbesondere aufgrund des elastischen Überzugs der Auflage Schwingungen des Rühwerks in gewissen Grenzen zuläßt. Diese Schwingungen führen zu Verschleißerscheinungen, die sich durch ein zunehmendes Spiel zwischen den seitlichen Führungsflächen der Auflage und der Halterung bemerkbar machen.

Aufgabe der Erfindung ist es daher, eine Einhängevorrichtung der eingangs genannten Art zu schaffen, die eine spielfreie und schwingungsarme Anordnung eines Tauchmotor-Rührwerks in einem Mischbecken oder dergleichen ermöglicht.

Die Aufgabe wird gemäß der Erfindung dadurch gelöst, daß an der Halterung und der Stützeinrichtung zueinander korrespondierende Führungsflächen vorgesehen sind, die als zusammenwirkende Klemmschrägen ausgebildet sind und in Arbeitsstellung des Rührwerks zur Erzeugung einer spielfreien Klemmung zwischen Halterung und Stützeinrichtung aufeinanderliegen.

Die erfindungsgemäße Lösung bietet den Vorzug, daß die miteinander korrespondierenden Führungsflächen der Halterung und der Stützeinrichtung durch die Gewichtskraft des Rührwerks ständig spielfrei miteinander in Berührung gehalten werden. Insbesondere dadurch, daß ein Spiel zwischen der Halterung und dem Leitelement vermieden wird, werden Pendelbewegungen des Rührwerks zuverlässig verhindert.

Vorzugsweise sind als Führungsflächen an der Halterung und der Stützeinrichtung zueinander korrespondierende, in etwa in Gewichtskraftrichtung des Rührwerks wirkende obere Klemmschrägen vorgesehen.

In vorteilhafter Weiterbildung der Erfindung ist vorgesehen, daß als zusätzliche Führungsflächen an der Halterung und der Stützeinrichtung zueinander korrespondierende, in etwa in Schubrichtung des Rührwerks wirkende seitliche Klemmschrägen vorgesehen sind. Hierdurch wird in vorteilhafter Art und Weise die durch das Rührwerk erzeugte Schubkraft ausgenutzt, um eine zusätzliche Klemmkraft auf die Einhängevorrichtung aufzubringen.

Besonders günstig wirkt sich dabei der durch die Gewichtskraft des freikragend aufgehängten Rührwerks erzeugte Hebel um die Einhängevorrichtung in Verbindung mit der durch den Propeller des Rührwerks erzeugten Schubkraft aus. Die hieraus resultierende Klemmkraft, die größtenteils auf die seitlichen Klemmschrägen wirkt, ist außerordentlich hoch.

Gemäß der bevorzugten Ausführung der Erfindung ist die Stützeinrichtung als ortsfest montierbarer Lagerbock ausgebildet. Dies hat den Vorzug, daß die Leiteinrichtung bzw. das Leitelement keine durch das Rührwerk eingeleiteten Kräfte aufnehmen muß. Sowohl die Gewichtskraft des Rührwerks als auch die Schubkraft wird zuverlässig in die Stützeinrichtung abgeleitet. Die Leiteinrichtung dient ausschließlich der Führung des Rührwerks. Diese muß nicht mehr notwendigerweise an der Mauerkrone des Misch- oder Belebungsbeckens oder an einer auf dem Becken verlegten Brücke befestigt sein. Hierdurch werden auch dort eventuelle Dauerschäden vermieden.

Zweckmäßigerweise wird die Halterung durch wenigstens eine, vorzugsweise zwei, an dem Rührwerk angeordnete Führungsklauen gebildet, die das vorzugsweise als Leitrohr ausgebildete Leitelement umgreifen.

Nach der bevorzugten Ausführungsform der Erfindung ist an dem Lagerbock ein Sockel für das Leitelement ausgebildet, wobei die Klemmschrägen an dem Sockel vorgesehen sind.

Vorzugsweise ist der Sockel als massiver Kunststoffeinsatz des Lagerbocks ausgebildet. Hierdurch wird eine weitestgehend schwingungsgedämpfte Klemmung erzielt.

Gemäß der bevorzugten Ausführung der Erfindung ist an dem Lagerbock eine Ausnehmung vorgesehen, die in der Arbeitsstellung des Rührwerks eine an dem Rührwerk angeordnete Sicherungszunge aufnimmt. Dies stellt eine zusätzliche Sicherung zur Aufnahme nicht berechenbarer horizontaler, quer zur Propellerachse des Rührwerks wirkender Kräfte dar. Solche Kräfte können beispielsweise bei einer ungleichmäßigen Anströmung des Rührwerks auftreten und zu Verwindungen oder elastischen Verformungen der gesamten Stützeinrichtung führen.

Die Erfindung wird nachstehend anhand eines in den Zeichnungen dargestellten Ausführungsbeispiels erläutert.

Es zeigen die:
- Fig. 1a und 1b: jeweils eine schematische Darstellung der Einhängevorrichtung gemäß der Erfindung, die den Einhängevorgang des Rührwerks verdeutlicht,
- Fig. 2: eine Draufsicht auf das Rührwerk mit der Einhängevorrichtung aus Fig. 1,
- Fig. 3: eine schematische Seitenansicht eines Tauchmotor-Rührwerks mit einer Halterung gemäß der Erfindung sowie einer entsprechenden Stützeinrichtung, als Explosionsdarstellung,
- Fig. 4: das auf den Lagerbock aufgesetzte Tauchmotor-Rührwerk und
- Fig. 5: eine Teilansicht in Richtung des Pfeils A in Fig. 4.

Die Einhängevorrichtung gemäß der Erfindung besteht im wesentlichen aus einer an dem Tauchmotor-Rührwerk 1 angeschraubten Halterung 2, die beispielsweise als Graugußteil ausgeführt sein kann, und einer Stützeinrichtung für das Rührwerk 1, die mit der Halterung 2 zusammenwirkt. Die Halterung 2 ist mit zwei Führungsklauen 3 versehen, die ein nur andeutungsweise dargestelltes Leitrohr 4 umgreifen. Das Leitrohr 4 ist über einen Lagerbock 5 auf dem Boden eines nicht dargestellten Misch- oder Belebungsbeckens fest verankert. Der Lagerbock 5 ist ortsfest an dem Boden des Beckens verschraubt.

Über einen ebenfalls nicht dargestellten Hebegalgen oder dergleichen kann das Rührwerk 1 mittels eines Seilzuges 6 in dem Becken herabgelassen werden und auf dem Lagerbock 5 bzw. auf dem Sockel 7 des Lagerbocks 5 abgesetzt werden.

Der Sockel 7 des Lagerbocks 5 ist bei dem dargestellten Ausführungsbeispiel als massiver Kunststoff-Block ausgebildet, der als Einsatz in den Lagerbock 5 eingelassen ist. Die Führungsklauen 3 der Halterung 2 sind mit in der Zeichnung schräg nach unten weisenden, d. h. in Bezug auf die Achse des Leitrohres geneigten, in etwa in Gewichtskraftrichtung des Rührwerks 1 wirkenden, als Klemmschrägen ausgebildeten Führungsflächen 8 ausgebildet. Diese Klemmschrägen 8 wirken mit hierzu korrespondierenden Klemmschrägen 8' des Sockels 7 als obere Klemmschrägen 8, 8' zusammen, wenn das Rührwerk 1 in seiner Arbeitsstellung auf dem Lagerbock 5 abgesetzt ist.

Die Gewichtskraft des Rührwerks 1 bewirkt beim Auftreten von Verschleißerscheinungen ein spielfreies Nachstellen der Klemmung zwischen der Halterung 2 und dem Sockel 7.

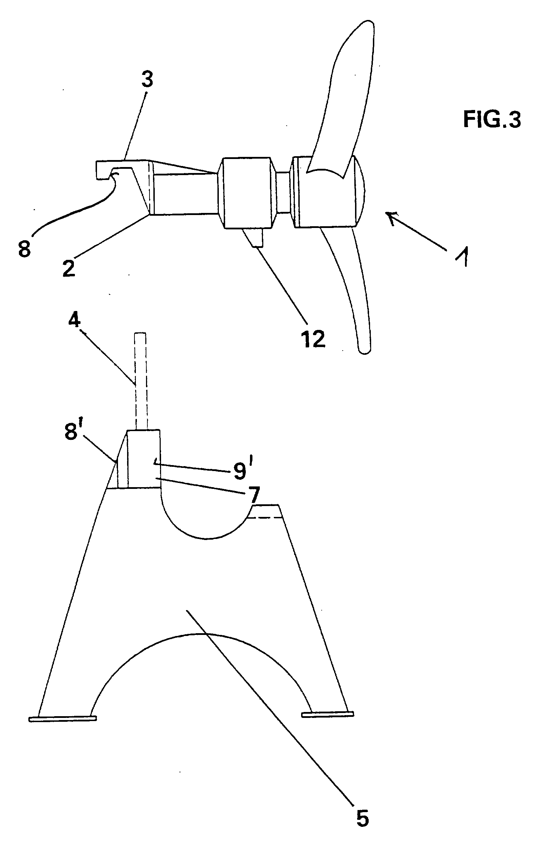

Um eine sichere Einspannung des Rührwerks in jede mögliche Schwingungsrichtung zu gewährleisten, macht sich die Erfindung vorteilhafterweise auch die durch das Rührwerk 1 bzw. durch den Propeller 10 erzeugte Schubkraft zunutze. Hierzu sind die Führungsklauen 3 zusätzlich mit in etwa in Schubkraftrichtung des Rührwerks 1 wirkenden und in Bezug auf die Längsachse des Rührwerks geneigten Klemmschrägen 9 versehen, die in der Arbeitsstellung des Rührwerks mit hierzu korrespondierend ausgebildeten Klemmschrägen 9' des Sockels 7 als seitliche Klemmschrägen 9, 9' zusammenwirken. Dies ist insbesondere aus der in Fig. 2 gezeigten Draufsicht ersichtlich.

Um bei Abnutzung der miteinander in Eingriff befindlichen Flächen eine entsprechende Nachstellbarkeit durch die wirkende Schubkraft zu gewährleisten, ist in arretierter Stellung des Rührwerks 1 zwischen der Halterung 2 und dem Sockel 7 ein Abstand 11 vorgesehen.

Dadurch, daß das Rührwerk 1 an seinem auskragenden Ende nicht abgestützt ist, erzeugt die Gewichtskraft des Rührwerks ein Moment um die Einhängung des Rührwerks im Bereich der oberen Klemmschrägen, welches zusammen mit der durch den Propeller erzeugten Schubkraft eine außerordentlich hohe Klemmkaft erzeugt.

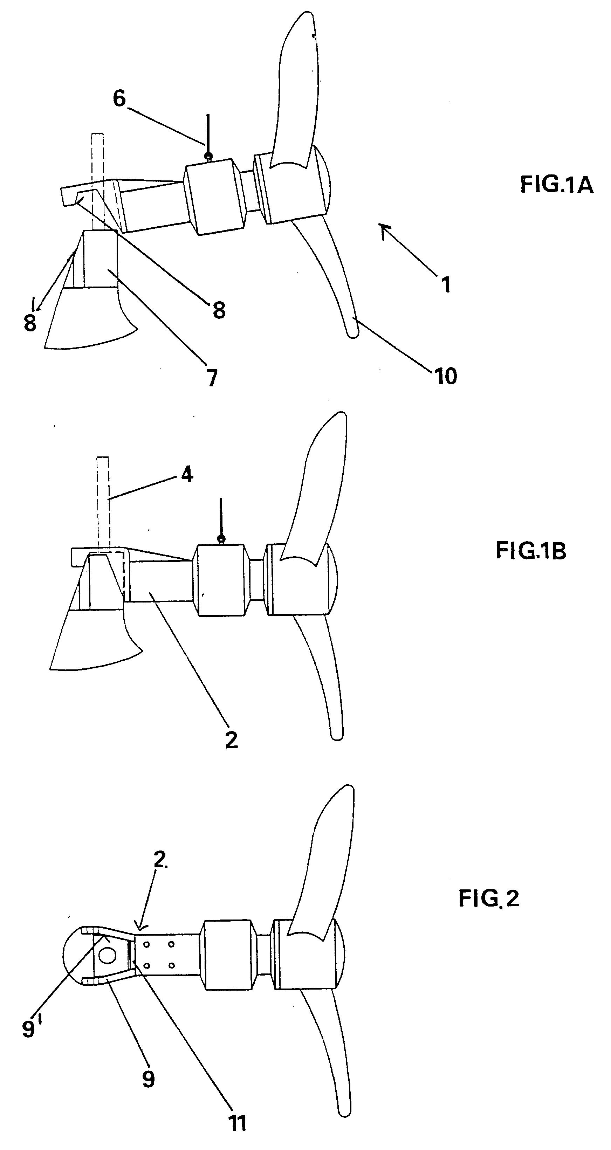

Das Absetzen des Rührwerks 1 ist in den Fig. 1a und 1b verdeutlicht. Der Seilzug 6 ist etwas außerhalb des Gewichtsschwerpunkts des Rührwerks 1 angeschlagen, so daß die Längsachse des Rührwerks 1 eine leichte Schrägstellung erhält. Sodann wird das Rührwerk 1 abgelassen und mit der Halterung 2 bzw. mit den Führungsklauen 3 auf dem Sockel 7 abgesetzt. Zuerst werden die oberen Klemmschrägen 8 und 8' miteinander in Eingriff gebracht. Ein weiteres Ablassen des Rührwerks bewirkt ein Kippen des Rührwerks quer zu seiner Längsachse, wobei das durch die Gewichtskraft des Rührwerks 1 erzeugte Moment ein Aufeinanderklemmen der seitlichen Klemmschrägen 9 und 9' bewirkt.

Beim Herausheben des Rührwerks erleichtert wiederum der Hebel zwischen dem Seilanschlagpunkt und der Einhängevorrichtung, der ein Kippen des Rührwerks 1 beim Anheben bewirkt, das Aufheben der Klemmung.

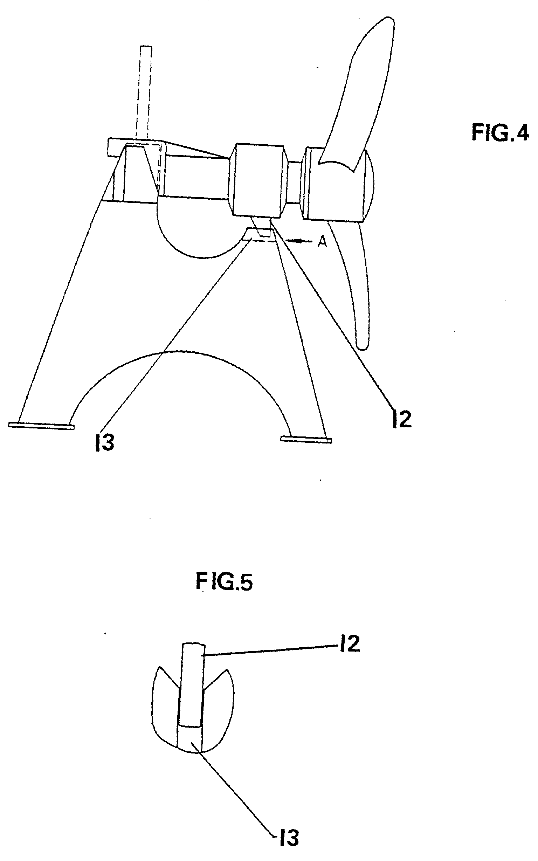

Wie aus Fig. 4 ersichtlich ist, ist an dem Rührwerkskörper in der Nähe der Wirkebene des Propellers 10 eine Sicherungszunge 12 vorgesehen, die in der Arbeitsstellung des Rührwerks 1 in eine entsprechende Ausnehmung 13 des Lagerbocks 5 eingreift und eine zusätzliche Sicherung gegen horizontale Pendelbewegungen des Rührwerks 1 darstellt. Da die Sicherungszunge 12 nur bei außerordentlichen Belastungen der Einhängevorrichtung, beispielweise bei einer elastischen Verformung der Einhängevorrichtung, wirksam wird, kann diese sich berührungsfrei in die Ausnehmung 13 erstrecken.

### Bezugszeichenliste

- 1: Tauchmotor-Rührwerk
- 2: Halterung
- 3: Führungsklauen
- 4: Leitrohr
- 5: Lagerbock
- 6: Seilzug
- 7: Sockel
- 8, 8': obere Klemmschrägen
- 9, 9': seitliche Klemmschrägen
- 10: Propeller
- 11: Abstand
- 12: Sicherungszunge
- 13: Ausnehmung

## Patentansprüche

1. Einhängevorrichtung für ein an einem Leitelement oder dergleichen geführtes Rührwerk, insbesondere zum Einsatz in Misch- und Belebungsbecken oder Pumpensümpfen oder dergleichen, im wesentlichen bestehend aus einer an dem Rührwerk angeordneten, das Leitelement umgreifenden Halterung sowie einer die Gewichtskraft des Rührwerks in Arbeitsstellung aufnehmenden Stützeinrichtung, **dadurch gekennzeichnet, daß** an der Halterung (2) und der Stützeinrichtung zueinander korrespondierende Führungsflächen vorgesehen sind, die als zusammenwirkende Klemmschrägen (8, 8'; 9, 9') ausgebildet sind und in Arbeitsstellung des Rührwerks zur Erzeugung einer spielfreien Klemmung zwischen Halterung (2) und Stützeinrichtung aufeinanderliegen.

2. Einhängevorrichtung nach Anspruch 1, **dadurch gekennzeichnet, daß** als Führungsflächen an der Halterung (2) und der Stützeinrichtung zueinander korrespondierende, in etwa in Gewichtskraftrichtung des Rührwerks (1) wirkende obere Klemmschrägen (8, 8') vorgesehen sind.

3. Einhängevorrichtung nach Anspruch 1 oder 2, **dadurch gekennzeichnet, daß** als Führungsflächen an der Halterung (2) und der Stützeinrichtung zueinander korrespondierende, in etwa in Schubrichtung des Rührwerks (1) wirkende seitliche Klemmschrägen (9, 9') vorgesehen sind.

4. Einhängevorrichtung nach einem der Ansprüche 1 bis 3, **dadurch gekennzeichnet, daß** die Stützeinrichtung als ortsfest montierbarer Lagerbock (5) ausgebildet ist.

5. Einhängevorrichtung nach einem der Ansprüche 1 bis 4, **dadurch gekennzeichnet, daß** die Halterung (2) durch wenigstens eine, vorzugsweise zwei an dem Rührwerk (1) angeordnete Führungsklauen (3) gebildet wird, die das vorzugsweise als Leitrohr (4) ausgebildete Leitelement umgreifen.

6. Einhängevorrichtung nach Anspruch 4 oder 5, **dadurch gekennzeichnet, daß** an dem Lagerbock (5) ein Sockel (7) für das Leitelement ausgebildet ist, wobei die Klemmschrägen (8', 9') an dem Sockel (7) vorgesehen sind.

7. Einhängevorrichtung nach Anspruch 6, **dadurch gekennzeichnet, daß** der Sockel (7) als massiver Kunststoffeinsatz des Lagerbocks (5) ausgebildet ist.

8. Einhängevorrichtung nach einem der Ansprüche 4 bis 7, **dadurch gekennzeichnet, daß** an dem Lagerbock (5) eine Ausnehmung (13) vorgesehen ist, die in der Arbeitsstellung des Rührwerks (1) eine an dem Rührwerk (1) angeordnete Sicherungszunge (12) aufnimmt.

## Claims

1. A suspension device for an agitator mechanism guided on a guide element or the like, in particular for use in mixing and activating vessels or pump sumps or the like, substantially comprising a holder which is arranged on the agitator mechanism and which embraces the guide element, and a support device which carries the weight of the agitator mechanism in the working position, **characterised in that** provided on the holder (2) and the support device are mutually corresponding guide surfaces which are in the form of co-operating clamping slopes (8, 8'; 9, 9') and which in the working position of the agitator mechanism bear against each other to produce a play-free clamping action between the holder (2) and the support device.

2. A suspension device according to claim 1 **characterised in that** provided as the guide surfaces on the holder (2) and the support device are mutually corresponding upper clamping slopes (8, 8') which act approximately in the direction of the weight of the agitator mechanism (1).

3. A suspension device according to claim 1 or claim 2 **characterised in that** provided as the guide surfaces on the holder (2) and the support device are mutually corresponding lateral clamping slopes (9, 9') acting approximately in the thrust direction of the agitator mechanism (1).

4. A suspension device according to one of claims 1 to 3 **characterised in that** the support device is in the form of a mounting block (5) which can be stationarily fitted.

5. A suspension device according to one of claims 1 to 4 **characterised in that** the holder (2) is formed by at least one and preferably two guide claws (3) which are arranged on the agitator mechanism (1) and which embrace the guide element which is preferably in the form of a guide tube (4).

6. A suspension device according to claim 4 or claim 5 **characterised in that** a base (7) for the guide element is provided on the mounting block (5), the clamping slopes (8', 9') being provided on the base (7).

7. A suspension device according to claim 6 **characterised in that** the base (7) is in the form of a solid plastics insert of the mounting block (5).

8. A suspension device according to one of claims 4 to 7 **characterised in that** provided on the mounting block (5) is an opening (13) which in the working position of the agitator mechanism (1) receives a securing tongue (12) arranged on the agitator mechanism (1).

## Revendications

1. Dispositif d'accrochage pour un agitateur positionné dans un élément de guidage ou similaire, en particulier pour une utilisation dans des bassins de mélange et d'activation ou dans des puisards d'aspiration de pompes ou similaires, se composant pour l'essentiel d'un support disposé sur l'agitateur et entourant l'élément de guidage ainsi que d'un dispositif d'appui absorbant le poids de l'agitateur en position de travail, **caractérisé en ce que** sur le support (2) et sur le dispositif d'appui sont prévues des surfaces de guidage qui correspondent l'une à l'autre, qui sont réalisées sous forme d'éléments de serrage inclinés interactifs (8, 8' ; 9, 9') et qui reposent les unes sur les autres en position de travail de l'agitateur pour assurer un serrage sans jeu entre le support (2) et le dispositif d'appui.

2. Dispositif d'accrochage selon la revendication 1, **caractérisé en ce que** des éléments de serrage inclinés supérieurs (8, 8') qui correspondent l'un à l'autre et qui agissent approximativement en direction de l'effort imposé par le poids de l'agitateur (1) sont prévus en tant que surfaces de guidage sur le support (2) et sur le dispositif d'appui.

3. Dispositif d'accrochage selon la revendication 1 ou 2, **caractérisé en ce que** des éléments de serrage inclinés latéraux (9, 9') qui correspondent l'un à l'autre et qui agissent approximativement en direction de poussée de l'agitateur (1) sont prévus en tant que surfaces de guidage sur le support (2) et sur le dispositif d'appui.

4. Dispositif d'accrochage selon l'une des revendications 1 à 3, **caractérisé en ce que** le dispositif d'appui est réalisé sous forme de trépied porteur (5) pouvant être monté de manière fixe.

5. Dispositif d'accrochage selon l'une des revendications 1 à 4, **caractérisé en ce que** le support (2) est constitué par au moins une, de préférence deux, griffe(s) de guidage (3) disposée(s) sur l'agitateur (1) et qui entoure(nt) l'élément de guidage réalisé de préférence sous la forme d'un tube de guidage (4).

6. Dispositif d'accrochage selon la revendication 4 ou 5, **caractérisé en ce qu'**un socle (7) pour l'élément de guidage est formé sur le trépied porteur (5), les éléments de serrage inclinés (8', 9') étant prévus sur le socle (7).

7. Dispositif d'accrochage selon la revendication 6, **caractérisé en ce que** le socle (7) est réalisé sous forme d'insert massif en matériau synthétique du trépied porteur (5).

8. Dispositif d'accrochage selon l'une des revendications 4 à 7, **caractérisé en ce que** sur le trépied porteur (5) est prévu un évidement (13) qui, en position de travail de l'agitateur (1), reçoit une languette de sécurité (12) disposée sur l'agitateur (1).
